# EUROPÄISCHE PATENTSCHRIFT

(11) **EP 2 591 402 B1**
(45) Veröffentlichungstag und Bekanntmachung des Hinweises auf die Patenterteilung: **06.11.2019**
(21) Anmeldenummer: 11738995.7
(22) Anmeldetag: 28.06.2011
(51) Int. Cl.: G05B 9/03, H03K 19/177

(54) **FELDGERÄT ZUR BESTIMMUNG ODER ÜBERWACHUNG EINER PHYSIKALISCHEN ODER CHEMISCHEN PROZESSGRÖßE**
FIELD DEVICE FOR DETERMINING OR MONITORING A PHYSICAL OR CHEMICAL PROCESS VARIABLE
APPAREIL DE TERRAIN POUR LA DÉTERMINATION OU LA SURVEILLANCE D'UNE GRANDEUR DE PROCESSUS PHYSIQUE OU CHIMIQUE

(30) Priorität: 10.11.2010 DE 102010043706; 05.07.2010 DE 102010030953
(43) Veröffentlichungstag der Anmeldung: 15.05.2013
(73) Patentinhaber: Endress+Hauser SE+Co. KG, 79689 Maulburg (DE)
(72) Erfinder: GIRARDEY, Romuald, F-68330 Huningue (FR)
(74) Vertreter: Andres, Angelika Maria
(86) Internationale Anmeldenummer: PCT/EP2011/060833
(87) Internationale Veröffentlichungsnummer: WO 2012/004161

(56) Entgegenhaltungen:
- WO-A1-2008/046694
- WO-A1-2009/155993
- DE-A1-102007 054 672
- DE-U1- 20 010 739
- US-A1- 2007 152 709
- JOSEF BORCSOK ET AL: "Implementation of a 1oo2-RISC-architecture on FPGA for safety systems", COMPUTER SYSTEMS AND APPLICATIONS, 2008. AICCSA 2008. IEEE/ACS INTERNATIONAL CONFERENCE ON, IEEE, PISCATAWAY, NJ, USA, 31. März 2008 (2008-03-31), Seiten 1046-1051, XP031245085, ISBN: 978-1-4244-1967-8

## Beschreibung

Die Erfindung bezieht sich auf ein Feldgerät zur Bestimmung oder Überwachung einer physikalischen oder chemischen Prozessgröße. Bevorzugt wird das Feldgerät in der Automatisierungstechnik, insbesondere in der Prozess- und Fabrikautomatisierung eingesetzt. Verwiesen sei in diesem Zusammenhang auf die WO 2004/013585 A1, aus der bereits eine Lösung bekannt geworden ist, die sich insbesondere mit einer Ausgestaltung eines Feldgeräts befasst, das in sicherheitskritischen Anwendung im Bereich der Prozessautomatisierung eingesetzt werden kann. Prinzipiell ist die Erfindung jedoch keineswegs auf den Bereich der Prozess- und Fabrikautomatisierung beschränkt, sondern kann auch in sicherheitskritischen Anwendungen im Automobilsektor, etc. eingesetzt werden.

Im Folgenden wird der Bereich der Automatisierungstechnik etwas näher beleuchtet: In der Automatisierungstechnik, insbesondere in der Prozessautomatisierungstechnik, werden Feldgeräte eingesetzt, die zur Bestimmung und Überwachung von Prozessvariablen dienen. Beispiele für derartige Feldgeräte sind Füllstandsmessgeräte, Durchflussmessgeräte, Analysemessgeräte, Druck- und Temperaturmessgeräte, Feuchte- und Leitfähigkeitsmessgeräte, Dichte und Viskositätsmessgeräte. Die Sensoren dieser Feldgeräte erfassen die entsprechenden Prozessvariablen, z.B. den Füllstand, den Durchfluss, den pH-Wert, die Stoffkonzentration, den Druck, die Temperatur, die Feuchte, die Leitfähigkeit, die Dichte oder die Viskosität.

Unter den Begriff 'Feldgeräte' werden aber auch Aktoren, z. B. Ventile oder Pumpen, subsumiert, über die beispielsweise der Durchfluss einer Flüssigkeit in einer Rohrleitung oder der Füllstand in einem Behälter veränderbar ist. Eine Vielzahl solcher Feldgeräte wird von der Firmengruppe Endress + Hauser angeboten und vertrieben.

In der Regel sind Feldgeräte in modernen automatisierungstechnischen Anlagen ebenso wie im Automobilsektor über Kommunikationsnetzwerke, wie HART- Multidrop, Punkt zu Punkt Verbindung, Profibus, Foundation Fieldbus, den CAN-Bus mit einer übergeordneten Einheit verbunden, die als Leitsystem oder übergeordnete Steuereinheit bezeichnet wird. Diese übergeordnete Einheit dient zur Steuerung, zur Diagnose zur Visualisierung, zur Überwachung sowie zur Inbetriebnahme und zum Bedienen der Feldgeräte. Für den Betrieb von Feldbussystemen notwendige Zusatzkomponenten, die direkt an einen Feldbus angeschlossen sind und die insbesondere zur Kommunikation mit den übergeordneten Einheiten dienen, werden ebenfalls häufig als Feldgeräte bezeichnet. Bei diesen Zusatzkomponenten handelt es sich z. B. um Remote I/Os, um Gateways, um Linking Devices oder um Controller, Wireless Adapter. Auch diese werden unter den Begriff 'Feldgeräte' subsumiert.

Der Software-Anteil bei Feldgeräten steigt stetig an. Der Vorteil beim Einsatz von Microcontroller-gesteuerten intelligenten Feldgeräten (Smart Field Devices) besteht darin, dass sich über anwendungsspezifische Softwareprogramme eine Vielzahl von unterschiedlichen Funktionalitäten in einem Feldgerät realisieren lässt; auch lassen sich Programmänderungen relativ einfach durchführen. Der hohen Flexibilität der programmgesteuerten Feldgeräte steht auf der anderen Seite als Folge der sequentiellen Programmabarbeitung eine relativ geringe Verarbeitungsgeschwindigkeit und damit eine entsprechend geringe Messrate entgegen.

Um die Verarbeitungsgeschwindigkeit zu erhöhen, werden immer dann, wenn es wirtschaftlich gerechtfertigt ist, in den Feldgeräten ASICs - Application Specific Integrated Circuits - eingesetzt. Durch die anwendungsspezifische Konfiguration können diese Bausteine Daten und Signale wesentlich schneller verarbeiten, als dies ein Softwareprogramm tun kann. Insbesondere für rechenintensive Anwendungen sind ASICs daher hervorragend geeignet.

Nachteilig bei der Applikation von ASICs ist, dass ihre Funktionalität nach Erstellung fest vorgegeben ist. Eine nachträgliche Änderung der Funktionalität ist bei diesen Bausteinen nicht ohne Weiteres möglich. Weiterhin zahlt sich der Einsatz von ASICs nur bei relativ großen Stückzahlen aus, da der Entwicklungsaufwand und die damit verbundenen Kosten hoch sind.

Um den Missstand der fest vorgegebenen Funktionalität zu umgehen, ist aus der WO 03/098154 A1 ein konfigurierbares Feldgerät bekannt geworden, bei dem ein rekonfigurierbarer Logikbaustein in Form eines FPGA vorgesehen ist. Bei dieser bekannten Lösung wird beim Systemstart der Logikbaustein mit mindestens einem Mikrocontroller, der auch als Embedded Controller bezeichnet wird, konfiguriert. Nachdem die Konfiguration abgeschlossen ist, wird die erforderliche Software in den Mikrocontroller geladen. Der hierbei benötigte rekonfigurierbare Logikbaustein muss über ausreichende Ressourcen, und zwar Logik-, Verdrahtungs- und Speicherressourcen, verfügen, um die gewünschten Funktionalitäten zu erfüllen. Logikbausteine mit vielen Ressourcen benötigen viel Energie, was wiederum aus funktioneller Sicht ihren Einsatz in der Automatisierung nur eingeschränkt möglich macht. Nachteilig beim Einsatz von Logikbausteinen mit wenigen Ressourcen und somit mit einem geringeren Energieverbrauch ist die mitunter erhebliche Einschränkung in der Funktionalität des entsprechenden Feldgeräts.

Je nach Anwendungsfall müssen die Feldgeräte unterschiedlichsten Sicherheitsanforderungen genügen. Um den jeweiligen Sicherheitsanforderungen, z.B. dem SIL-Standard 'Security Integrity Level', dem in der Prozessautomatisierung eine große Rolle zukommt, zu genügen, muss die Funktionalität der Feldgeräte darüber hinaus redundant und/oder diversitär ausgelegt sein.

Redundanz bedeutet erhöhte Sicherheit durch doppelte oder mehrfache Auslegung aller sicherheitsrelevanter Hard- und Software-Komponenten.

Diversität bedeutet, dass die in den unterschiedlichen Messpfaden befindlichen Hardware-Komponenten, wie z.B. ein Mikroprozessor, ein A/D Wandler, von unterschiedlichen Herstellern stammen und/oder dass sie von unterschiedlichem Typ sind. Im Falle von Software-Komponenten erfordert die Diversität, dass die in den Mikroprozessoren gespeicherte Software aus unterschiedlichen Quellen, sprich von unterschiedlichen Herstellern bzw. Programmierern stammt. Durch alle diese Maßnahmen soll sichergestellt werden, dass ein sicherheitskritischer Ausfall des Feldgeräts ebenso wie das Auftreten von gleichzeitig auftretenden systematischen Fehlern bei der Messwertbereitstellung mit hoher Wahrscheinlichkeit ausgeschlossen ist. Auch ist es bekannt, zusätzlich noch einzelne wesentliche Hardware- und Software-Komponenten der Auswerteschaltung redundant und/oder diversitär auszulegen. Durch die redundante und diversitäre Auslegung einzelner von Hardware- und Software-Komponenten lässt der Grad der Sicherheit weiter erhöhen.

Ein Beispiel für eine sicherheitsrelevante Applikation ist die Füllstandsüberwachung in einem Tank, in dem eine brennbare, explosive oder auch eine nicht brennbare, dafür aber eine die Umwelt gefährdende Flüssigkeit gelagert ist. Hier muss sichergestellt sein, dass die Zufuhr von Flüssigkeit zu dem Tank sofort unterbrochen wird, sobald ein maximal zulässiger Füllstand erreicht ist. Dies wiederum setzt voraus, dass das Messgerät hoch zuverlässig den Füllstand detektiert und fehlerfrei arbeitet.

Aus der WO 2009/062954 A1 ist ein Feldgerät bekannt geworden mit einem Sensor, der nach einem definierten Messprinzip arbeitet, und einer Kontroll-/Auswerteeinheit, die die vom Sensor gelieferten Messdaten in Abhängigkeit von einem in der jeweiligen sicherheitskritischen Anwendung geforderten Sicherheitsstandard entlang von mindestens zwei gleichwertigen Messpfaden aufbereitet und auswertet. Die Kontroll-/Auswerteeinheit ist zumindest teilweise als rekonfigurierbarer Logikbaustein mit mehreren partiell dynamisch rekonfigurierbaren Funktionsmodulen ausgebildet. Die Kontroll-/Auswerteeinheit konfiguriert die Funktionsmodule in den Messpfaden in Abhängigkeit von der jeweils definierten sicherheitskritischen Anwendung derart, dass das Feldgerät entsprechend dem geforderten Sicherheitsstandard ausgelegt ist. Problematisch bei der bekannten Ausgestaltung ist, dass eine Fehlfunktion, z.B. ein Kurzschluss oder eine Temperaturänderung in einem Teilbereich andere Teilbereiche automatisch mit beeinflusst. Es kommt zu einem Übersprechen auf andere Teilbereiche, so dass das Feldgerät fehlerhafte Messergebnisse liefern kann und nicht mehr verlässlich arbeitet. Dies stellt insbesondere in sicherheitskritischen Anwendungen ein hohes Risiko dar, das nicht akzeptabel ist.

In der nicht vorveröffentlichten DE 10 2010 002 346.9, angemeldet am 25.02.2010, ist ein Feldgerät beschrieben, bei dem die Kontroll-/Auswerteeinheit auf einem einzigen FPGA Baustein realisiert ist. Genutzt wird ein Standard FPGA Baustein. Hierbei sind auf dem FPGA Baustein zumindest ein erster Teilbereich und ein zweiter Teilbereich vorgesehen. In jedem Teilbereich ist ein digitaler Messpfad partiell dynamisch rekonfigurierbar, der aus mehreren softwarebasierten und/oder hardwarebasierten Funktionsmodulen besteht. Die einzelnen Teilbereiche sind durch permanent konfigurierte Distanzbereiche bzw. verbotene Bereiche voneinander getrennt, wobei die Distanzbereiche so ausgestaltet sind, dass eine Temperatur- und/oder eine Spannungsänderung in einem der Teilbereiche keinen Einfluss auf den anderen Teilbereich bzw. die anderen Teilbereiche hat und dass im Fehlerfall keine Verbindung zwischen den Teilbereichen entsteht. Die Kontroll-/Auswerteeinheit rekonfiguriert die Funktionsmodule in den Messpfaden in Abhängigkeit von der jeweils definierten sicherheitskritischen Anwendung partiell dynamisch derart, dass das Feldgerät den geforderten Sicherheitsstandard erfüllt. Partiell dynamisch rekonfigurierbar bedeutet übrigens, dass die Funktionsmodule des FPGA in dem entsprechenden Messpfad zur Laufzeit, also dynamisch, umkonfiguriert werden. Dies ist insbesondere wichtig in einem auftretenden Fehlerfall. Ein derartiger Fehlerfall wird beispielsweise durch einfallende Gamma- oder kosmische Strahlung, also hochenergetische Strahlung, hervorgerufen, die die Funktion einer oder mehrerer Logikblöcke bzw. logischer Komponenten oder sonstiger Ressourcen verändert oder außer Kraft setzt.

Der Erfindung liegt die Aufgabe zugrunde, ein hochflexibles Feldgerät für den Einsatz in sicherheitskritischen Anwendungen vorzuschlagen.

Die Aufgabe wird durch ein Feldgerät gelöst, das aus einem Sensor, der nach einem definierten Messprinzip arbeitet, und einer Kontroll-/Auswerteeinheit besteht. Die Kontroll-/Auswerteeinheit ist auf einem partiell dynamisch rekonfigurierbaren FPGA Bauteil realisiert, das aus einer Vielzahl von FPGA Einzelblöcken aufgebaut ist, wobei jeder FPGA Einzelblock aus einer Vielzahl von Logikblöcken besteht und wobei jedem FPGA Einzelblock oder einer definierten Gruppe von FPGA Einzelblöcken globale Ressourcen bzw. globale Funktionsblöcke zugeordnet sind. Auf dem FPGA-Bauteil sind zumindest ein erster Teilbereich und ein zweiter Teilbereich vorgesehen, die aus FPGA Einzelblöcken und entsprechenden globalen Ressourcen bez. globalen Funktionsblöcken bestehen. In jedem Teilbereich ist ein digitaler Messpfad partiell dynamisch rekonfigurierbar, der aus mehreren softwarebasierten und/oder hardwarebasierten Funktionsmodulen besteht. Bei den globalen Ressourcen oder bei den globalen Funktionsblöcken handelt es sich um DCMs, also um Digital Clock Manager, um globale Verdrahtungen, um Takt- oder Konfigurationsressourcen und/oder um Ein-/Ausgänge. Weiterhin kann es sich bei den globalen Ressourcen auch um Speicherbausteine (RAMs) und Multiplizierer handeln. Die zuletzt genannten Ressourcen sind nicht zwingend notwendig.

Gemäß einer vorteilhaften Ausgestaltung des erfindungsgemäßen Feldgeräts wird vorgeschlagen, dass zwischen den FPGA Einzelblöcken Verdrahtungen zur Übertragung von Daten und/oder Signalen vorgesehen sind. Hierdurch ist es möglich, mehrere Einzelblöcke geeignet miteinander zu verschalten, wodurch komplexere Funktionen realisierbar sind.

Eine vorteilhafte Ausgestaltung sieht vor, dass die Kontroll-/Auswerteeinheit die FPGA Einzelblöcke bevorzugt durch Funktionsmodule in den Messpfaden bzw. in den Teilbereichen in Abhängigkeit von einer definierten sicherheitskritischen Anwendung partiell dynamisch rekonfiguriert, so dass das Feldgerät einen geforderten Sicherheitsstandard erfüllt. Beispielsweise handelt es sich bei dem Sicherheitsstandard um den Standard IEC61508 (Edition 2).

Um eine definierte Trennung der Teilbereiche zu erreichen, sind die einzelnen Teilbereiche durch Distanzbereiche voneinander getrennt, wobei die Distanzbereiche aus FPGA-Einzelblöcken mit entsprechenden globalen Ressourcen bzw. globalen Funktionsblöcken bestehen. Originär existiert ein FPGA Bauteil mit mehreren FPGA Einzelblöcken, die zu Teilbereichen zusammen geschaltet werden. Die Teilbereiche auf dem FPGA Bauteil bilden somit voneinander isolierte Inseln, wodruch keine wechselseitige Beeinflussung auftritt.

Bevorzugt sind die Distanzbereiche so ausgestaltet, dass eine Potentialtrennung zwischen den Teilbereichen erreicht wird, die derart ist, dass eine Temperatur- und/oder eine Spannungsänderung in einem der Teilbereiche keinen Einfluss auf einen benachbarten Teilbereich bzw. die benachbarten Teilbereiche hat und dass im Fehlerfall keine Verbindung zwischen den Teilbereichen auftritt. Hierbei ist die Dimensionierung der zur Potentialtrennung verwendeten Distanzbereiche abhängig von der Dimensionierung der FPGA Einzelblöcke, wobei ein Distanzbereich zumindest die Breite eines FPGA Einzelblocks aufweist. Die Breite der Distanzbereiche ist auf jeden Fall so gewählt, dass Kürzschlüsse oder ein Übersprechen zwischen den Teilbereichen ausgeschlossen ist. Weiterhin dienen die Distanzbereiche der thermischen Entkopplung der Teilbereiche.

Die Granularität, d.h. die Größe der Inseln, ist letztlich ein Kompromiss zwischen Overhead, wobei hierunter insbesondere die Konfigurationsressourcen zu verstehen sind, und Grad der Flexibilität. Mit Flexibilität ist gemeint, dass der Benutzer die Größe der Gruppen von Einzelblöcken bzw. die Teilbereiche während der Entwicklungsphase und unter Beachtung von gewissen Regeln auch während des Betriebs des Feldgeräts frei definieren kann.

Eine vorteilhafte Weiterbildung des erfindungsgemäßen Feldgeräts schlägt vor, dass die in jedem der Distanzbereiche angeordneten Logikblöcke, die globalen Ressourcen bzw. die globalen Funktionsblöcke ebenso wie die entsprechenden Verdrahtungen auf Masse liegen oder extern durch die Abschaltung der Stromversorgung gesperrt sind.

In Abhängigkeit von den vorliegenden Sicherheitsbestimmungen sind die Messpfade mit den partiell dynamisch rekonfigurierbaren Funktionsmodulen redundant, diversitär oder redundant und diversitär ausgelegt.

Weiterhin ist vorgesehen, dass der Kontroll-/Auswerteeinheit ein Voter bzw. ein Mikrocontroller zugeordnet ist, der von den benachbarten Messpfaden ebenfalls durch Distanzbereiche getrennt ist, der die von oder in den Messpfaden zur Verfügung gestellten und einander entsprechenden Messdaten miteinander vergleicht und im Falle einer Abweichung eine Warn- oder Fehlermeldung und/oder generiert. Bevorzugt ist der Voter bzw. der Mikrocontroller in einem FPGA Einzelblock angeordnet.

Gemäß einer vorteilhaften Ausführungsform des erfindungsgemäßen Feldgeräts ist vorgesehen, dass der Voter bzw. der Mikrocontroller seriell oder parallel die Funktionsmodule für eine ungeradzahlige Anzahl von redundanten und oder diversitären Messpfaden partiell dynamisch rekonfiguriert, wobei der Voter bzw. der Mikrocontroller die von oder in den Messpfaden zur Verfügung gestellten Messdaten miteinander vergleicht, und wobei der Voter bzw. der Mikrocontroller eine Warnmeldung generiert, dass ein definierter Messpfad fehlerhafte Daten liefert, wenn auf dem definierten Messpfad Messdaten zur Verfügung gestellt werden, die von den Messdaten der verbleibenden Messpfade abweichen. Mit dieser Ausgestaltung ist es im Fehlerfall möglich, zu bestimmen, in welchen Messpfad der Fehler aufgetreten ist.

Darüber hinaus ist vorgesehen, dass auf einem ausgewählten Teilbereich des FPGA, der von den benachbarten Teilbereichen durch Distanzbereiche getrennt ist, ein statischer Bereich vorgesehen ist, in dem zumindest ein Funktionsmodul, in dem das Steuerprogramm zu Konfigurierung der in den einzelnen Teilbereichen dynamisch zu konfigurierenden Funktionsmodule abläuft, permanent konfiguriert ist.

Eine vorteilhafte Ausgestaltung des erfindungsgemäßen Feldgeräts sieht Kommunikationsleitungen vor, die außerhalb des FPGA Bauteils angeordnet sind. Weiterhin ist zumindest eine Begrenzungsvorrichtung zur Spannungs- und/oder Strombegrenzung zwischen den Teilbereichen in die einzelnen Kommunikationsleitungen vorgesehen.

Als besonders vorteilhaft wird es in Verbindung mit der vorliegenden Erfindung angesehen, wenn zumindest einige der globalen Ressourcen bzw. der globalen Funktionsblöcke mehreren FPGA Teilblöcken zugeordnet sind. So ist bevorzugt eine globale Ressource bzw. ein globaler Funktionsblock für die Strom-/Spannungsversorgung mehreren FPGA Einzelblöcken zugeordnet. Die entsprechenden Versorgungsleitungen sind durch Zwischenschalten von elektrischen oder elektronischen Trennelementen beliebig aufteilbar.

Darüber hinaus wird vorgeschlagen, dass die Kontroll-/Auswerteeinheit die FPGA Teilblöcke in den Teilbereichen bzw. in den Messpfaden und die entsprechenden Distanzbereiche in Abhängigkeit von der jeweiligen Anwendung partiell dynamisch rekonfiguriert.

Weiterhin ist im Falle einer sicherheitskritischen Anwendung vorgesehen, dass die Kontroll-/Auswerteeinheit die partiell dynamische Rekonfiguration so vornimmt, dass die einzelnen Teilbereiche zu jedem Zeitpunkt durch zumindest einen Distanzbereich voneinander getrennt sind.

Die Erfindung wird anhand der nachfolgenden Figuren näher erläutert. Es zeigt:
Fig. 1: eine Darstellung eines aus dem Stand der Technik bekannten FPGA Bauteils,
Fig. 2: eine Darstellung einer Ausgestaltung des erfindungsgemäßen FPGA Bauteils,
Fig. 3: eine beispielhafte konkrete Ausgestaltung des erfindungsgemäßen FPGA Bauteils für eine sicherheitskritische Anwendung,
Fig. 4: ein Blockschaltbild für die Verdrahtung der Versorgungsspannung und

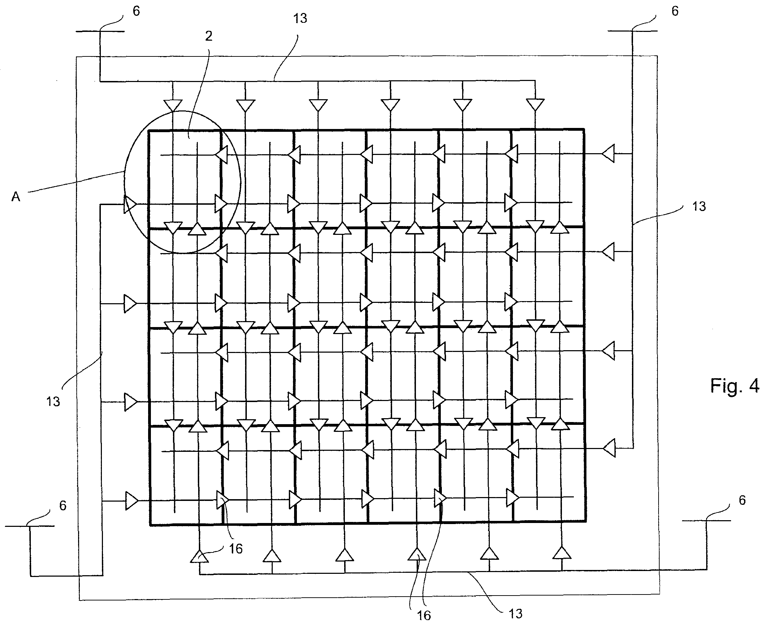

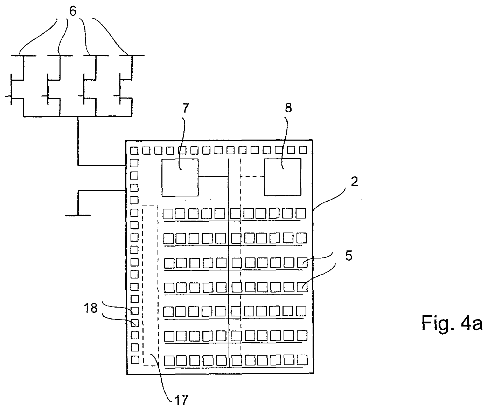

Fig. 4: den in Fig. 4 gekennzeichneten Ausschnitt A.

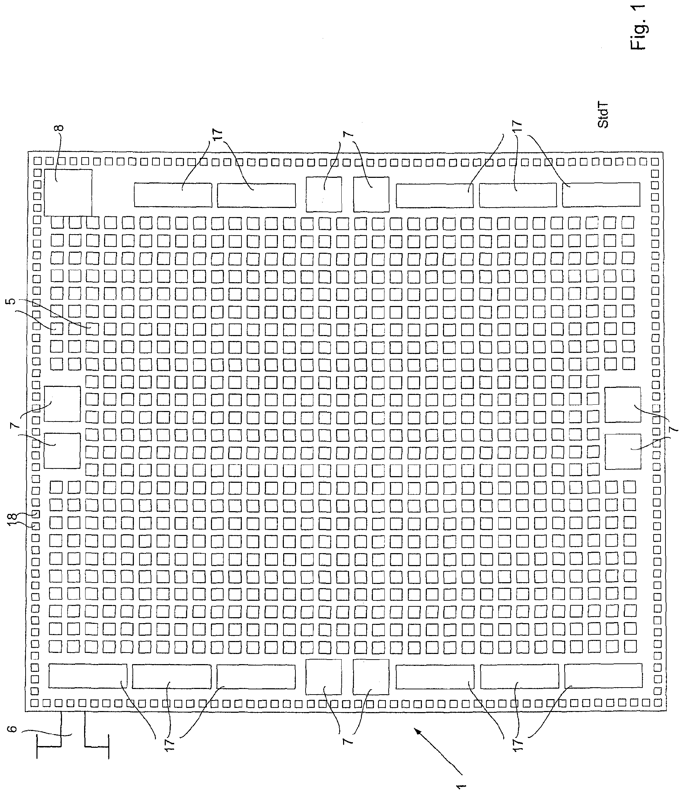

Fig. 1 zeigt eine Darstellung eines aus dem Stand der Technik bekannten FPGA Bauteils 1, das partiell dynamisch rekonfigurierbar ausgestaltet ist. Auf dem Bauteil 1 sind eine Vielzahl von rekonfigurierbaren Logikblöcken 5 angeordnet. Weiterhin sind auf dem FPGA Bauteil 1 globale Ressourcen zu finden, wie die zentrale Spannungsversorgung 6, mehrere Taktressourcen 7, sog. Digital Clock Manager, und Konfigurationsressourcen 8. Weiterhin sind auf dem FPGA Bauteil 1 Ressourcen, wie Multiplizierer und/oder Speicherelemente 17 und Ein-/Ausgänge 18 angeordnet.

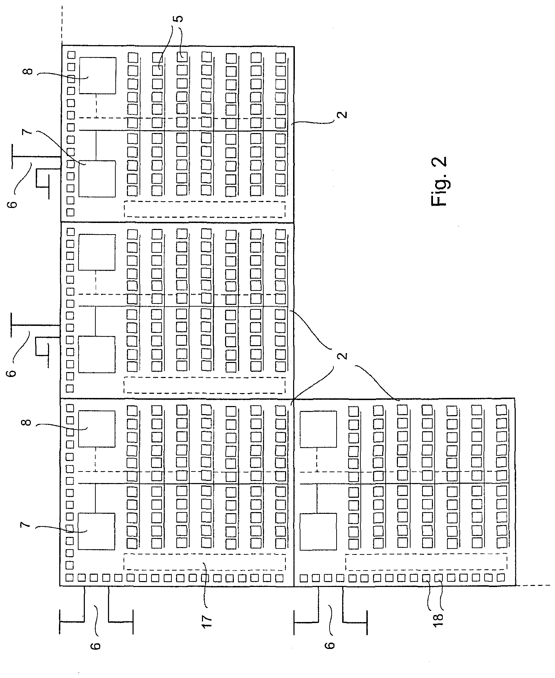

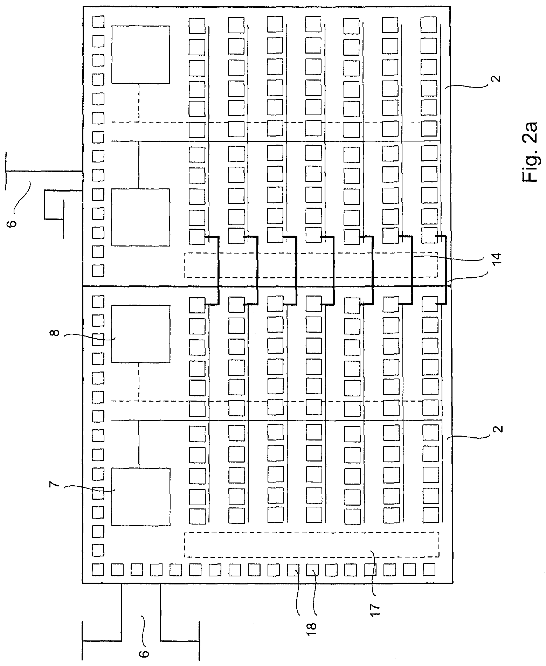

Fig. 2 zeigt eine Darstellung einer Ausgestaltung des erfindungsgemäßen FPGA Bauteils 1. Während auf dem in Fig. 1 gezeigten FPGA Bauteil 1 die Logikblöcke 5 im Wesentlichen homogen angeordnet sind, weist das erfindungsgemäße FPGA Bauteil 1 eine Vielzahl von FPGA Einzelblöcken 2 auf, in denen die Logikblöcke 5 in voneinander weitgehend getrennten Inseln angeordnet sind. Die Einzelblöcke 2 haben jeweils eine getrennte Spannungsversorgung 6, dezidierte Taktressourcen 7, wie DCM, globale Verbindungsleitungen, dezidierte Konfigurationsressourcen 8, wie JTAG, Konfigurationsleitungen und dezidierte Ein-/Ausgänge 18. Diese Ressourcen werden in Verbindung mit der Erfindung als globale Ressourcen 6, 7, 8 bezeichnet. Daneben gibt es optional dezidierte, weniger wichtige globale Ressourcen, wie Multiplizierer /Speicherelemente 17, usw. Wie bereits an vorhergehender Stelle beschrieben, können die globalen Ressourcen 6, 7, 8 auch einer Gruppe von Teilblöcken 2 zugeordnet sein. Je nach Anwendung ist eine derartige Ausgestaltung sinnvoll.

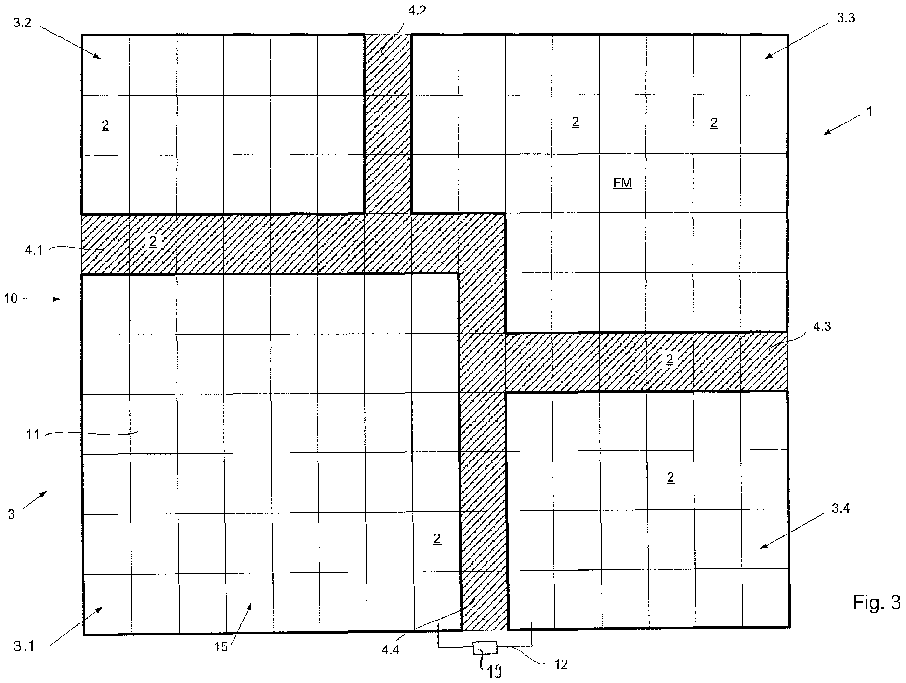

In Fig. 3 ist eine beispielhafte konkrete Ausgestaltung des erfindungsgemäßen FPGA Bauteils 1 für eine sicherheitskritische Anwendung beschrieben. Im dargestellten Fall ist das FPGA Bauteil 1 in vier Teilbereiche 3.1, 3.2, 3.3, 3.4 unterteilt. Der Bereich 3.1 ist als statischer Bereich 15 ausgebildet. Hier ist bevorzugt der Microcontroller bzw. der Voter 11 permanent konfiguriert. In den Teilbereichen 3.2, 3.3, 3.4 werden die einzelnen redundanten und/oder diversitären Messpfade MP1, MP2, MP3 partiell dynamisch rekonfiguriert. Hierbei bedeutet partiell, dass nur einzelne Funktionsmodule FM in einem der Messpfade MP1, MP2, MP3 rekonfiguriert werden können.

Die einzelnen Teilblöcke 2 sind durch Distanzbereiche 4.1, 4.2, 4.3, 4.4 voneinander getrennt. Die Distanzbereiche 4.1, 4.2, .. sind so ausgestaltet, dass eine Potentialtrennung zwischen den Teilbereichen 3.2, 3.2, ... erreicht wird. Diese ist derart, dass eine Temperatur- und/oder eine Spannungsänderung in einem der Teilbereiche MP1, MP2, ... keinen Einfluss auf einen benachbarten Teilbereich bzw. die benachbarten Teilbereiche hat und dass im Fehlerfall keine Verbindung zwischen den Teilbereichen MP1, MP2, ...auftritt. Insbesondere ist die Dimensionierung der zur Potentialtrennung eingesetzten Distanzbereiche 4.1, 4.2, ...abhängig von der Dimensionierung der FPGA Einzelblöcke 2. In der Fig. 3 entspricht die Breite der Distanzbereiche 4.1, 4.2, ... jeweils einem einzelnen FPGA Einzelblocks 2. Wie in Fig. 2 beschrieben, besitzt jeder Teilblock 2 bzw. eine Gruppe von Teilblöcken 2 globale Ressourcen 6, 7, 8. Um eine sichere Trennung zwischen den Teilbereichen 3.1, 3.2, .. zu erreichen, werden die im Bereich der Distanzbereiche 4.1, 4.2, .. liegenden Teilblöcke 2 von der Spannungsversorgung 6 getrennt bzw. versorgt und mit Masse verbunden oder entsprechend konfiguriert. In Verbindung mit dem erfindungsgemäßen Feldgerät ist es möglich, die einzelnen Messpfade MP1, MP2, ... während des Betriebs des Feldgeräts zu rekonfigurieren bzw. partiell zu rekonfigurieren. Hierbei muss jedoch beim Einsatz in einer sicherheitskritischen Anwendung darauf geachtet werden, dass bei einer Änderung der Dimensionierung eines Messpfades MP1, MP2, ... stets zuerst der Sicherheitsabstand, sprich die entsprechenden Distanzbereiche 4.1, 4.2, ... konfiguriert werden.

Die Kommunikation zwischen den FPGA Teilbereichen 3.1, 3.2, ...bzw. den Messpfaden MP1, MP2, ... erfolgt weiterhin extern und wird durch Widerstände 19 abgesichert.

Zuvor wurde bereits erwähnt, dass es je nach Anwendung möglich ist, die globalen Ressourcen 6, 7, 8 einer variablen Anzahl von Teilblöcken 2 zuzuordnen. Dies wird dadurch ermöglicht, dass zumindest eine globale Ressource 6, 7, 8 bzw. ein globaler Funktionsblock für die Strom-/Spannungsversorgung und/oder für den Takt und/oder für die Konfiguration mehreren FPGA Einzelblöcken 2 vorhanden ist. Die entsprechenden Versorgungsleitungen (und/oder Taktleitungen und/oder Konfigurationsleitungen - letztere sind in Fig. 4 und Fig. 4a nicht gesondert dargestellt) sind durch Zwischenschalten von elektrischen oder elektronischen Trennelementen 16 beliebig aufteilbar. Bei den Trennelementen 16 handelt es sich beispielsweise um Transistoren.

Dargestellt ist in Fig. 4 ein Blockschaltbild für die Verdrahtung 14 der Versorgungsspannung 6. Die Versorgungsleitungen 13 dürfen sich nicht kreuzen und sind daher ggf. in unterschiedlichen Ebenen des FPGA Bauteils 1 angeordnet. In Fig. 4a ist der in Fig. 4 gekennzeichneten Ausschnitt A vergrößert dargestellt. Ebenso wie es Versorgungsleitungen 13 für die Versorgungsspannung 6 gibt, so gibt es separate Leitungen für die weiteren globalen Ressourcen 7, 8, die gleichfalls mit Trennelementen 16 einzelnen oder in Gruppen beliebig zu- und abschaltbar sind.

### Bezugszeichenliste

- 1: FPGA Bauteil
- 2: FPGA Einzelblock
- 3.n: Teilbereich
- 4.n: Distanzbereich
- 5: Logikblock
- 6: globale Ressource für die Strom-/Spannungsversorgung
- 7: globale Ressource für den Takt
- 8: globale Ressource für die Konfiguration

- 10: Kontroll-/Auswerteeinheit
- 11: Voter bzw. Microcontroller
- 12: Kommunikationsleitung
- 13: Versorgungsleitung
- 14: Verdrahtung
- 15: statischer Bereich
- 16: Trennelement
- 17: Multiplizierer / Speicherbaustein
- 18: Ein-/Ausgang
- 19: Widerstand

## Patentansprüche

1. Feldgerät zur Bestimmung oder Überwachung einer physikalischen oder chemischen Prozessgröße, bestehend aus einem Sensor, der nach einem definierten Messprinzip arbeitet, und einer Kontroll-/Auswerteeinheit (10), wobei die Kontroll-/Auswerteeinheit (10) auf einem partiell dynamisch rekonfigurierbaren FPGA-Bauteil (1) realisiert ist,
wobei,
das FPGA-Bauteil (1) aus einer Vielzahl von FPGA-Einzelblöcken (2) aufgebaut ist, jeder FPGA Einzelblock (2) aus einer Vielzahl von Logikblöcken (5) besteht und dass jedem FPGA Einzelblock (2) oder Gruppen von FPGA Einzelblöcken (2) globale Ressourcen (6, 7, 8) oder globale Funktionsblöcke zugeordnet sind,
auf dem FPGA-Bauteil (1) zumindest ein erster Teilbereich (3.1) und ein zweiter Teilbereich (3.2) vorgesehen sind, die aus FPGA Einzelblöcken (2) und entsprechenden globalen Ressourcen (6, 7, 8) oder globalen Funktionsblöcken bestehen, und
in jedem Teilbereich (3.1, 3.2) ein digitaler Messpfad (MP1, MP2) partiell dynamisch rekonfigurierbar ist, der aus mehreren softwarebasierten und/oder hardwarebasierten Funktionsmodulen (FM) besteht.

2. Feldgeräte nach Anspruch 1,
wobei zwischen den FPGA Einzelblöcken (2) Verdrahtungen (14) zur Übertragung von Daten und/oder Signalen vorgesehen sind.

3. Feldgerät nach Anspruch 1,
wobei die Kontroll-/Auswerteeinheit (10) die Funktionsmodule (FM) in den Messpfaden (MP1, MP2) bzw. in den Teilbereichen (3.1, 3.2) in Abhängigkeit von einer definierten sicherheitskritischen Anwendung partiell dynamisch rekonfiguriert, so dass das Feldgerät einen geforderten Sicherheitsstandard erfüllt.

4. Feldgerät nach Anspruch 1, 2 oder 3,
wobei die einzelnen Teilbereiche (3.1, 3.2) durch Distanzbereiche (4.1, 4.2) voneinander getrennt sind, wobei die Distanzbereiche (4.1, 4.2) aus FPGA-Einzelblöcken (2) mit entsprechenden globalen Ressourcen (6, 7, 8) bzw. globalen Funktionsblöcken bestehen.

5. Feldgerät nach Anspruch 4,
wobei die Distanzbereiche (4.1, 4.2, ..) so ausgestaltet sind, dass eine Potentialtrennung zwischen den Teilbereichen (3.2, 3.2, ...) erreicht wird, die derart ist, dass eine Temperatur- und/oder eine Spannungsänderung in einem der Teilbereiche (MP1; MP2) keinen Einfluss auf einen benachbarten Teilbereich (MP2; MP1) bzw. die benachbarten Teilbereiche hat und dass im Fehlerfall keine Verbindung zwischen den Teilbereichen (MP1, MP2) auftritt.

6. Feldgerät nach Anspruch 4 oder 5, wobei die Dimensionierung der zur Potentialtrennung eingesetzten Distanzbereiche (4.1, 4.2) abhängig ist von der Dimensionierung der FPGA Einzelblöcke (2) ist und zumindest die Breite eines FPGA Einzelblocks (2) aufweist.

7. Feldgerät nach einem oder mehreren der Ansprüche 2-6, wobei die in jedem der Distanzbereiche (4.1, 4.2) angeordneten Logikblöcke (5), die globalen Ressourcen (6, 7, 8) bzw. die globalen Funktionsblöcke ebenso wie die entsprechenden Verdrahtungen (14) auf Masse liegen oder extern durch die Abschaltung der Stromversorgung gesperrt sind.

8. Feldgerät nach einem oder mehreren der vorhergehenden Ansprüche, wobei die Messpfade (MP1, MP2) mit den partiell dynamisch rekonfigurierbaren Funktionsmodulen (FM) redundant, diversitär oder redundant und diversitär ausgelegt sind.

9. Feldgerät nach einem oder mehreren der vorhergehenden Ansprüche, wobei der Kontroll-/Auswerteeinheit (10) ein Voter (2) bzw. ein Mikrocontroller zugeordnet ist, der von den benachbarten Messpfaden (MP1, MP2) ebenfalls durch Distanzbereiche (4.2) getrennt ist, der die von oder in den Messpfaden (MP1, MP2) zur Verfügung gestellten und einander entsprechenden Messdaten miteinander vergleicht und im Falle einer Abweichung eine Warn- oder Fehlermeldung und/oder generiert.

10. Feldgerät nach Anspruch 1 oder 9, wobei der Voter (2) bzw. der Mikrocontroller seriell oder parallel die Funktionsmodule für eine ungeradzahlige Anzahl von redundanten und oder diversitären Messpfaden (MP1, MP2, MP3, ..) partiell dynamisch rekonfiguriert,
wobei der Voter (2) bzw. der Mikrocontroller die von oder in den Messpfaden (MP1, MP2, MP3, ..) zur Verfügung gestellten Messdaten miteinander vergleicht,
und wobei der Voter (2) bzw. der Mikrocontroller eine Warnmeldung generiert, dass ein definierter Messpfad (MP1; MP2; MP3) fehlerhafte Daten liefert, wenn auf dem definierten Messpfad (MP1; MP2; MP3) Messdaten zur Verfügung gestellt werden, die von den Messdaten der verbleibenden Messpfade (MP1; MP2; MP3) abweichen.

11. Feldgerät nach einem oder mehreren der vorhergehenden Ansprüche, wobei auf einem ausgewählten Teilbereich (11) des FPGA (1), der von den benachbarten Teilbereichen (3.1, 3.2) durch Distanzbereiche (4.1, 4.2) getrennt ist, ein statischer Bereich (15) vorgesehen ist, in dem zumindest ein Funktionsmodul (FM), in dem das Steuerprogramm zu Konfigurierung der in den einzelnen Teilbereichen (3.1, 3.2) dynamisch zu konfigurierenden Funktionsmodule (FM) abläuft, permanent konfiguriert ist.

12. Feldgerät nach einem oder mehreren der vorhergehenden Ansprüche, wobei Kommunikationsleitungen (12) vorgesehen sind, die zwischen den Teilbereichen (3.1, 3.2) außerhalb des FPGA Bauteils (1) angeordnet sind.

13. Feldgerät nach Anspruch 12, wobei zumindest eine Begrenzungsvorrichtung (13) zur Spannungs- und/oder Strombegrenzung zwischen den Teilbereichen (3.1, 3.2) in die einzelnen Kommunikationsleitungen (12) vorgesehen ist.

14. Feldgerät nach einem oder mehreren der vorhergehenden Ansprüche, wobei zumindest einige der globalen Ressourcen (6, 7, 8) bzw. der globalen Funktionsblöcke mehreren FPGA Einzelblöcken (2) zugeordnet sind.

15. Feldgerät nach Anspruch 14, wobei zumindest eine globale Ressource (6, 7, 8) bzw. ein globaler Funktionsblock für die Strom-/Spannungsversorgung und/oder für den Takt und/oder für die Konfiguration mehreren FPGA Einzelblöcken (2) zugeordnet ist, wobei die entsprechenden Versorgungsleitungen und/oder Taktleitungen und/oder Konfigurationsleitungen durch Zwischenschalten von elektrischen oder elektronischen Trennelementen (16) beliebig aufteilbar sind.

16. Feldgerät nach einem oder mehreren der vorhergehenden Ansprüche, wobei die Kontroll-/Auswerteeinheit die FPGA Einzelblöcke (2) in den Teilbereichen (3.1, 3.2) bzw. in den Messpfaden (MP1, MP2) und die entsprechenden Distanzbereiche (4.1, 4.2) in Abhängigkeit von der jeweiligen Anwendung partiell dynamisch rekonfiguriert.

17. Feldgerät nach Anspruch 16,
wobei die Kontroll-/Auswerteeinheit (10) im Falle einer sicherheitskritischen Anwendung die partiell dynamische Rekonfiguration so vornimmt, dass die einzelnen Teilbereiche (3.1, 3.2) zu jedem Zeitpunkt durch zumindest einen Distanzbereich (4.1, 4.2) voneinander getrennt sind.

## Claims

1. Field device designed to determine or monitor a physical or chemical process variable, consisting of a sensor which works according to a defined measuring principle, and a control/evaluation unit (10), wherein the control/evaluation unit (10) is implemented on a FPGA component (1) which can be partially dynamically reconfigured,
wherein the FPGA component (1) consists of a multitude of individual FPGA blocks (2),
wherein each individual FPGA block (2) consists of a multitude of logic blocks (5), and wherein global resources (6, 7, 8) or global function blocks are assigned to each individual FPGA block (2) or groups of individual FPGA blocks (2),
wherein at least a first subsection (3.1) and a second subsection (3.2) are provided on the FPGA component (1), said subsections consisting of individual FPGA blocks (2) and corresponding global resources (6, 7, 8) or global function blocks, and
wherein, in each subsection (3.1, 3.2), a digital measuring path (MP1, MP2) can be partially dynamically reconfigured, wherein said path consists of multiple software-based and/or hardware-based function modules (FM).

2. Field devices as claimed in Claim 1,
wherein wires (14) are provided between the individual FPGA blocks (2) for the transmission of data and/or signals.

3. Field device as claimed in Claim 1,
wherein the control/evaluation unit (10) partially dynamically reconfigures the function modules (FM) in the measuring paths (MP1, MP2) or in the subsections (3.1, 3.2) depending on a defined security-critical application in such a way that the field device satisfies a required security standard.

4. Field device as claimed in Claim 1, 2 or 3,
wherein the individual subsections (3.1, 3.2) are separated from one another by distance zones (4.1, 4.2), wherein the distance zones (4.1, 4.2) consist of individual FPGA blocks (2) with corresponding global resources (6, 7, 8) or global function blocks.

5. Field device as claimed in Claim 4,
wherein the distance zones (4.1, 4.2, ...) are designed in such a way that a potential separation between the subsections (3.1, 3.2, ...) is achieved, said separation being such that a change in the temperature and/or voltage in one of the subsections (MP1, MP2) does not have any influence on an adjacent subsection (MP2, MP1) or the adjacent subsections, and in that there is no connection between the subsections (MP1, MP2) in the event of an error.

6. Field device as claimed in Claim 4 or 5, wherein the sizing of the distance zones (4.1, 4.2) used for the separation of potential depends on the size of the individual FPGA blocks (2) and is at least the width of an individual FPGA block (2).

7. Field device as claimed in one or more of the Claims 2 to 6, wherein the logic blocks (5) arranged in each of the distance zones (4.1, 4.2), the global resources (6, 7, 8) or the global function blocks as well as the corresponding wires (14) are connected to ground or are blocked externally by the deactivation of the power supply.

8. Field device as claimed in one or more of the previous claims, wherein the measuring paths (MP1, MP2) with the function modules (FM) that can be partially dynamically reconfigured are designed as redundant, dissimilar or redundant and dissimilar.

9. Field device as claimed in one or more of the previous claims, wherein the control/evaluation unit (10) is assigned a voter (2) or a microcontroller, which is also separated from the adjacent measuring paths (MP1, MP2) by distance zones (4.2), which compares with one another the measuring data that are provided by or in the measuring paths (MP1, MP2) and correspond to one another, and generates a warning message or an error message if the data deviate from one another.

10. Field device as claimed in Claim 1 or 9, wherein the voter (2) or the microcontroller partially dynamically reconfigures - in series or in parallel - the function modules for an uneven number of redundant and/or dissimilar measuring paths (MP1, MP2, MP3, ...),
wherein the voter (2) or the microcontroller compares the measuring data provided by or in the measuring paths (MP1, MP2, MP3, ...) with one another, and wherein the voter (2) or the microcontroller generates a warning message specifying that a defined measuring path (MP1, MP2, MP3) is supplying incorrect data if measuring data are provided on the defined measuring path (MP1, MP2, MP3) that deviate from the measuring data of the remaining measuring paths (MP1, MP2, MP3).

11. Field device as claimed in one or more of the previous claims, wherein a static zone (15) is provided on a selected subsection (11) of the FPGA (1), which is separated from the adjacent subsections (3.1, 3.2) by distance zones (4.1, 4.2), wherein in said static zone (15) at least one function module (FM) is permanently configured, said function module running the control program for the configuration of the function modules (FM) to be dynamically configured in the individual subsections (3.1, 3.2).

12. Field device as claimed in one or more of the previous claims, wherein communication lines (12) are provided, said lines being arranged between the subsections (3.1, 3.2) outside the FPGA component (1).

13. Field device as claimed in Claim 12, wherein at least one limiting unit (13) is provided, said unit being designed to limit the voltage and/or power between the subsections (3.1, 3.2) in the individual communication lines (12).

14. Field device as claimed in one or more of the previous claims, wherein at least some of the global resources (6, 7, 8) or the global function blocks are assigned to multiple individual FPGA blocks (2).

15. Field device as claimed in Claim 14, wherein at least one global resource (6, 7, 8) or a global function block is assigned to multiple individual FPGA blocks (2) for power/voltage supply and/or for the clock and/or for the configuration, wherein the corresponding power lines and/or clock lines and/or configuration lines can split as required by the introduction of electrical or electronic separation elements (16).

16. Field device as claimed in one or more of the previous claims, wherein the control/evaluation unit (10) partially dynamically reconfigures the individual FPGA blocks (2) in the subsections (3.1, 3.2) or in the measuring paths (MP1, MP2) and the corresponding distance zones (4.1, 4.2) depending on the individual application.

17. Field device as claimed in Claim 16,
wherein, in the event of a security-critical application, the control/evaluation unit (10) implements the partially dynamic reconfiguration in such a way that the individual subsections (3.1, 3.2) are separated from one another by at least one distance zone (4.1, 4.2) at all times.

## Revendications

1. Appareil de terrain destiné à la détermination ou à la surveillance d'une grandeur de process physique ou chimique, constitué d'un capteur, qui fonctionne d'après un principe de mesure défini, et une unité de contrôle / d'exploitation (10), l'unité de contrôle / d'exploitation (10) étant réalisée sur un composant FPGA (1) partiellement reconfigurable dynamiquement,
pour lequel le composant FPGA (1) est constitué d'un grand nombre de blocs FPGA individuels (2),
chaque bloc FPGA individuel (2) étant constitué d'une grand nombre de blocs logiques (5), et des ressources globales (6, 7, 8) ou des blocs de fonction globaux étant attribués à chaque bloc FPGA individuel (2) ou à des groupes de blocs FPGA individuels (2),
au moins une première zone partielle (3.1) et une deuxième zone partielle (3.2) étant prévues sur le composant FPGA (1), lesquelles zones partielles sont constituées de blocs FPGA individuels (2) et de ressources globales (6, 7, 8) ou de blocs de fonction correspondant(e)s, et
un chemin de mesure (MP1, MP2) numérique étant reconfigurable dans chaque zone partielle (3.1, 3.2), lequel chemin est constitué de plusieurs modules de fonction (FM) basés sur le logiciel et/ou basés sur le matériel.

2. Appareils de terrain selon la revendication 1,
pour lesquels des câbles (14) sont prévus entre les blocs FPGA individuels (2) pour la transmission de données et/ou de signaux.

3. Appareil de terrain selon la revendication 1,
pour lequel l'unité de contrôle / d'exploitation (10) reconfigure de façon partiellement dynamique les modules de fonction (FM) dans les chemins de mesure (MP1, MP2) ou dans les zones partielles (3.1, 3.2) en fonction d'une application définie, critique en terme de sécurité, si bien que l'appareil de terrain est conforme à une norme de sécurité exigée.

4. Appareil de terrain selon la revendication 1, 2 ou 3,
pour lequel les différentes zones partielles (3.1, 3.2) sont séparées les unes des autres par des zones de distance (4.1, 4.2), les zones de distance (4.1, 4.2) étant constituées de blocs FPGA individuels (2) avec des ressources globales (6, 7, 8) ou des blocs de fonction globaux correspondant(e)s.

5. Appareil de terrain selon la revendication 4,
pour lequel les zones de distance (4.1, 4.2, ...) sont conçues de telle sorte qu'une séparation des potentiels entre les zones partielles (3.1, 3.2, ...) est obtenue, laquelle séparation est telle qu'un changement de température et/ou de tension dans l'une des zones partielles (MP1, MP2) n'a aucune influence sur une zone partielle (MP2, MP1) voisine, ou que présente les zones partielles adjacentes, et de telle sorte qu'en cas d'erreur, aucune liaison entre les zones partielles (MP1, MP2) n'apparaît.

6. Appareil de terrain selon la revendication 4 ou 5, pour lequel le dimensionnement des zones de distance (4.1, 4.2) utilisés pour la séparation de potentiel dépend du dimensionnement des blocs FPGA individuels (2) et présente au minimum la largeur d'un bloc FPGA individuel (2).

7. Appareil de terrain selon l'une ou plusieurs des revendications 2 à 6, pour lequel les blocs logiques (5) disposés dans chacune des zones de distance (4.1, 4.2), les ressources globales (6, 7, 8) ou les blocs de fonction globaux tout comme les câbles (14) correspondants sont reliés à la masse ou sont verrouillés en externe par la coupure de l'alimentation électrique.

8. Appareil de terrain selon l'une ou plusieurs des revendications précédentes, pour lequel les chemins de mesure (MP1, MP2) avec les modules de fonction (FM) reconfigurables partiellement de façon dynamique sont conçus de manière redondante, diversitaire ou redondante et diversitaire.

9. Appareil de terrain selon l'une ou plusieurs des revendications précédentes, pour lequel est attribué à l'unité de contrôle / d'exploitation (10) un dispositif de décision (2) ou un microcontrôleur, qui est également séparé des chemins de mesure (MP1, MP2) adjacents par des zones de distance (4.2), lequel dispositif de décision compare entre elles les données de mesure qui se correspondent et qui sont mises à disposition dans les chemins de mesure (MP1, MP2) et, en cas d'écart, génère un message d'avertissement et/ou un message d'erreur.

10. Appareil de terrain selon la revendication 1 ou 9, pour lequel le dispositif de décision (2) ou le microcontrôleur reconfigure, partiellement de façon dynamique, en série ou en parallèle les modules de fonction pour un nombre impair de chemins de mesure (MP1, MP2, MP3, ...) redondants et/ou diversitaires,
le dispositif de décision (2) ou le microcontrôleur comparant entre elles les données de mesure mises à disposition par ou dans les chemins de mesure (MP1, MP2, MP3, ...),
et le dispositif de décision (2) ou le microcontrôleur générant un message d'avertissement signalant qu'un chemin de mesure (MP1, MP2, MP3, ...) défini fournit des données erronées lorsque sont mises à disposition sur le chemin de mesure (MP1, MP2, MP3, ...) défini des données de mesure qui diffèrent des données de mesure des chemins de mesure (MP1, MP2, MP3, ...) restants.

11. Appareil de terrain selon l'une ou plusieurs des revendications précédentes, pour lequel est prévue, sur une zone partielle (11) sélectionnée du FPGA (1), qui est séparée des zones partielles (3.1, 3.2) adjacentes par des zones de distance (4.1, 4.2), une zone statique (15) dans laquelle est configuré en permanence au moins un module de fonction (FM), dans lequel est exécuté le programme de commande destiné à la configuration des modules de fonction (FM), lesquels modules doivent être configurés de façon dynamique dans les différentes zones partielles (3.1, 3.2).

12. Appareil de terrain selon l'une ou plusieurs des revendications précédentes, pour lequel sont prévues des lignes de communication (12), qui sont disposées entre les zones partielles (3.1, 3.2) à l'extérieur du composant FPGA (1).

13. Appareil de terrain selon la revendication 12, pour lequel est prévu un dispositif de limitation (13) destiné à la limitation de la tension et/ou du courant entre les zones partielles (3.1, 3.2), dans les différentes lignes de communication (12).

14. Appareil de terrain selon l'une ou plusieurs des revendications précédentes, pour lequel sont attribués plusieurs blocs FPGA individuels (2) au moins à quelques ressources globales (6, 7, 8) ou aux blocs de fonction globaux.

15. Appareil de terrain selon la revendication 14, pour lequel au moins une ressource globale (6, 7, 8) ou un bloc de fonction global est attribué pour l'alimentation en courant / tension et/ou pour l'horloge et/ou pour la configuration de plusieurs blocs FPGA individuels (2), les lignes d'alimentation et/ou les lignes d'horloge et/ou les lignes de configuration correspondantes pouvant être réparties librement par l'insertion d'éléments séparateurs (16) électriques ou électroniques.

16. Appareil de terrain selon l'une ou plusieurs des revendications précédentes, pour lequel l'unité de contrôle / d'exploitation (10) reconfigure, en partie de façon dynamique, les blocs FPGA individuels (2) dans les zones partielles (3.1, 3.2) ou dans les chemins de mesure (MP1, MP2) et les zones de distance (4.1, 4.2) correspondantes en fonction de l'application respective.

17. Appareil de terrain selon la revendication 16,
pour lequel l'unité de contrôle / d'exploitation (10) procède, dans le cas d'une application critique en terme de sécurité, à la reconfiguration partiellement dynamique de telle sorte que les différentes zones partielles (3.1, 3.2) soient à tout instant séparées les unes des autres par au moins une zone de distance (4.1, 4.2).
